# DEMANDE DE BREVET EUROPEEN

(11) **EP 4 498 545 A1**
(43) Date de publication de la demande: **29.01.2025**
(21) Numéro de dépôt: 24189475.7
(22) Date de dépôt: 18.07.2024
(51) Int. Cl.: H02G 3/08, A62C 3/16, H02B 1/28, H05K 5/02

(54) **IGNIFUGATION D'UN COMPARTIMENT COMPRENANT DES CÂBLES ÉLECTRIQUES**

(30) Priorité: 27.07.2023 FR 2308130
(71) Demandeur: Nexans, 92400 Courbevoie (FR)
(72) Inventeur: GYPPAZ, Franck, 69003 LYON (FR)
(74) Mandataire: Ipsilon

(57) **Abrégé**

L'invention concerne un élément ignifugé comprenant un compartiment renfermant des câbles électriques ; où ledit compartiment comporte des parois délimitant un espace interne audit compartiment et un espace externe audit compartiment, ces parois comprenant au moins une couche d'un matériau inflammable et au moins une couche à base d'un matériau géopolymère.

## Description

La présente invention a trait au domaine de l'ignifugation. Elle s'intéresse plus spécifiquement à la protection vis-à-vis du feu d'enceintes fermées, tels que des coffrets électriques fermés, notamment du type des armoires électriques et des boîtes de dérivations couramment employés dans les immeubles, par exemple, et non exclusivement, dans les immeubles d'habitation et les locaux destinés à recevoir du public.

Les propriétés dites « d'ignifugation » et de « protection vis-à-vis du feu » recherchées dans le cadre de la présente invention sont des propriétés de résistance au feu, qui empêchent un substrat de brûler dans les conditions d'un incendie, en permettant ainsi notamment d'inhiber la propagation du feu.

Historiquement, les dispositifs de type coffrets fermés renfermant des câbles électriques, comme par exemples les armoires électriques, ont majoritairement été fabriqués en métal. La tendance a été de remplacer progressivement le métal, conducteur électrique, par des matières plastiques, par exemple le PVC, aux propriétés isolantes, en vue d'éviter les risques électriques liés à l'emploi du métal notamment pour les utilisateurs finaux.

Cependant, les matières plastique (PVC ou autre) s'avèrent la plupart du temps -sinon systématiquement- constituer un matériau combustible propre à s'enflammer facilement et à jouer le rôle de propagateur de feu dans les conditions d'un incendie, ce qui fait émerger un autre risque non négligeable, qui a toutefois été rarement pris en considération par le passé.

Parmi les rares documents s'intéressant à la question de la protection vis-à-vis du feu des coffrets fermés de type armoires électriques à base de matières plastiques, on peut citer la demande US 2019/341758 qui préconise l'emploi d'une couche de matériau intumescent sur la surface du plastique.

Un but de la présente invention est de fournir un coffret électrique (notamment une armoire électrique) dont les parois sont à base d'un matériau inflammable, typiquement du plastique, mais qui présente néanmoins de bonnes propriétés de résistance au feu, de préférence en limitant en outre la génération de fumées.

A cet effet, il est proposé selon la présente invention de munir tout ou partie de la surface des parois du coffret électrique d'un revêtement à base d'un matériau géopolymère, qui s'avère propre à assurer la protection du matériau inflammable constitutif de la paroi.

Plus précisément, selon un premier aspect la présente invention a pour objet un élément ignifugé comprenant un compartiment renfermant des câbles électriques ; où ledit compartiment comporte des parois délimitant un espace interne audit compartiment et un espace externe audit compartiment, ces parois comprenant au moins une couche d'un matériau inflammable et au moins une couche à base d'un matériau géopolymère.

La couche de matériau inflammable est typiquement une couche de matière plastique, typiquement une couche de PVC, mais l'emploi d'autres matériaux inflammables, comme le bois par exemple ne sont pas exclus selon l'invention.

Selon un mode de réalisation intéressant, la couche à base de matériau géopolymère est localisée entre les câbles contenus dans l'espace interne du compartiment et la couche de matériau inflammable. Selon ce mode de réalisation, la couche à base de matériau géopolymère assure une protection de la couche de matériau inflammable vis-à-vis d'une flamme localisée au sein de l'espace interne du compartiment, typiquement une flamme émanant d'un départ de feu à partir d'au moins un des câbles électriques contenu dans l'espace interne (ou alternativement à partir d'un arc électrique issus d'un court-circuit apparaissant dans le compartiment au niveau de la connectique). Ce mode de réalisation permet ainsi de circonscrire le feu (et avantageusement les éventuelles fumées) au sein de l'espace interne du compartiment. En général, une intégrité mécanique du compartiment est maintenue dans le même temps.

Selon une première variante possible du mode de réalisation défini dans le paragraphe précédent, la couche à base de matériau géopolymère peut avantageusement revêtir la surface de l'espace interne du compartiment (dite ci-après « surface interne » du compartiment), de préférence la totalité de ladite surface interne de l'espace interne du compartiment.

Selon une autre variante, la couche à base de matériau géopolymère localisée entre les câbles contenus dans l'espace interne du compartiment et la couche de matériau inflammable n'est pas présente sur la surface interne du compartiment et une couche de masquage est appliquée entre la couche à base de matériau géopolymère et les câbles contenus dans l'espace interne du compartiment.

Selon un autre mode de réalisation possible, la couche à base de matériau géopolymère est localisée entre la couche de matériau inflammable et l'espace externe au compartiment Selon ce mode de réalisation, la couche à base de matériau géopolymère assure une protection de la couche de matériau inflammable vis-à-vis d'une flamme localisée à l'extérieur du compartiment. Ce mode de réalisation permet ainsi de circonscrire le feu (et avantageusement les éventuelles fumées) à l'extérieur du compartiment et de protéger l'intégrité des câbles électriques contenus dans son espace interne. En général, une intégrité mécanique du compartiment est maintenu dans le même temps.

Selon une première variante possible du mode de réalisation défini dans le paragraphe précédent, la couche à base de matériau géopolymère peut avantageusement revêtir la surface externe du compartiment, de préférence la totalité de ladite surface externe du compartiment.

Selon une autre variante, la couche à base de matériau géopolymère n'est pas directement présente sur la surface interne du compartiment et une **couche de masquage** est appliquée entre la couche à base de matériau géopolymère et l'espace externe du compartiment.

Lorsqu'une couche de masquage est employée (selon la variante du second mode décrite dans paragraphe précédent ou bien selon la seconde variante du premier mode de réalisation décrite plus haut), la couche à base de matériau géopolymère se retrouve prise en sandwich entre ladite couche de masquage et la couche de matériau inflammable.

Selon un mode particulier, la couche de masquage précitée peut être une seconde couche de matériau inflammable. Dans ce cas, qui constitue encore un autre mode particulier de mise en oeuvre possible de l'invention, la couche à base de matériau géopolymère est localisée entre une première couche de matériau inflammable (du côté de l'espace interne du compartiment) et une seconde couche de matériau inflammable, de composition identique ou non à celle de la première couche de matériau inflammable. Ce mode spécifique cumule les avantages des modes précédents et permet à la fois (i) de circonscrire un début d'incendie au sein de l'espace interne du compartiment; et (ii) de protéger les câbles contenus dans l'espace interne en cas d'incendie dans l'espace externe audit compartiment.

Quel que soit le mode de réalisation, la couche à base de matériau géopolymère employée selon l'invention est avantageusement obtenue par application, sur la couche à base de matériau inflammable à protéger, d'un substrat imprégné par une composition géopolymère puis durcissement de la composition géopolymère. Le substrat employé peut par exemple être choisi parmi le carton, le papier ou la ouate ou éventuellement un autre substrat cellulosique.

Au sens où il est employé dans la présente description, le terme de « matériau géopolymère » désigne un solide obtenu par durcissement d'une composition géopolymère. Le procédé de l'invention comprend en général, suite à l'application de la composition géopolymère, une étape de conversion de la composition géopolymère (initialement liquide) en un matériau géopolymère, notamment par séchage.

Dans le cadre des travaux qui ont conduit à la présente invention, les inventeurs ont maintenant montré que les compartiments ignifugés tels qu'obtenus selon l'invention présente des propriétés très intéressantes de résistance au feu, ce qui les rend par exemple particulièrement bien adaptés à titre d'armoires électriques ou de boites de dérivations notamment dans des logements d'habitation ou plus généralement à l'intérieur d'immeubles destinés à recevoir du public. Ces applications particulières des éléments ignifugés précités constituent, selon encore un autre aspect, un autre objet de la présente invention.

Différents aspects et modes de réalisation possibles de l'invention sont décrits plus en détails ci-après.

### Le matériau géopolymère et la composition géopolymère permettant de l'obtenir

Au sens de la présente description, le terme de « matériau géopolymère » désigne un matériau solide comprenant du silicium (Si), de l'aluminium (AI), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Le matériau géopolymère peut notamment être un matériau géopolymère aluminosilicate. Le cas échéant, ce matériau géopolymère aluminosilicate peut être choisi parmi les poly(sialates) répondant à la formule (I) Mₙ(-Si-O-Al-O-)ₙ [(M)-PS] et ayant un rapport molaire Si/AI égal à 1, les poly(sialate-siloxos) répondant à la formule (II) Mₙ(-Si-O-Al-O-Si-O-)ₙ [(M)-PPS] et ayant un rapport molaire Si/AI égal à 2, les poly(sialate-disiloxos) répondant à la formule (III) Mₙ(-Si-O-Al-O-Si-O-Si-O)ₙ [(M)-PSDS] et ayant un rapport molaire Si/AI égal à 3, et d'autres poly(sialates) de rapport Si/AI > 3, les poly(sialates) précités comprenant un cation alcalin M choisi parmi K, Na, Li, Cs et l'un de leurs mélanges, et n désigne le degré de polymérisation.

Le matériau géopolymère est obtenu à partir d'une composition géopolymère, en général par séchage, géopolymérisation et/ou polycondensation de ladite composition géopolymère (processus désignés ici par « *durcissement »* de la composition géopolymère).

Une « composition géopolymère », au sens de la présente description, est une composition, généralement liquide, apte à former par durcissement un matériau géopolymère solide. Les ingrédients de la composition géopolymère peuvent donc subir une polycondensation pour former ledit matériau géopolymère.

La formation du matériau géopolymère à partir de la composition géopolymère s'effectue par une réaction interne et n'est généralement pas le résultat d'un simple séchage, comme c'est généralement le cas pour des liants à base de silicates alcalins. En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

La composition géopolymère employée dans le cadre de la présente invention est de préférence une composition géopolymère aluminosilicate.

La composition géopolymère de l'invention est de façon particulièrement préférée une composition géopolymère comprenant de l'eau, du silicium (Si), de l'aluminium (AI), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère peut en particulier comprendre au moins un aluminosilicate, au moins un silicate alcalin, de l'eau, et éventuellement une base alcaline.

### L'aluminosilicate

Le (ou les) aluminosilicate(s) présent(s) dans la composition géopolymère peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes, et leurs mélanges.

Parmi ces composés, les métakaolins sont préférés, notamment ceux commercialisés par la société Imérys.

Dans l'invention, l'expression « métakaolin » signifie un kaolin calciné ou un aluminosilicate déshydroxylé. Il est de préférence obtenu par déshydratation d'un kaolin ou d'une kaolinite.

La composition géopolymère peut comprendre de 5 à 50% en poids environ d'aluminosilicate, et de préférence de 10 à 35% en poids environ d'aluminosilicate, par rapport au poids total de la composition géopolymère.

La teneur en aluminosilicate par rapport au poids de la matière sèche de la composition géopolymère est typiquement comprise entre 10 et 50%, par exemple entre 15 et 30 %

De préférence, la composition géopolymère employée selon la présente invention comprend un mélange de deux aluminosilicates distincts, à savoir au moins un premier aluminosilicate et au moins un deuxième aluminosilicate distinct du premier aluminosilicate.

De préférence, la composition géopolymère comprend deux kaolins calcinés distincts, ayant des températures de calcination différentes, de préférence un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C.

Selon une forme de réalisation particulièrement préférée de l'invention, la composition géopolymère comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C, au moins un premier silicate alcalin, de l'eau, et éventuellement une base alcaline. La composition géopolymère peut alors présenter des propriétés mécaniques améliorées, notamment en termes de flexibilité et de durabilité, tout en garantissant de bonnes propriétés de réaction et de résistance au feu.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar^{®} 450.

Le premier métakaolin peut être choisi parmi les kaolins calcinés à T_{c1} telle que définie ci-dessus, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar^{®} 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] correspondant à la masse totale de premier métakaolin dans la composition géopolymère rapportée à la masse totale de deuxième métakaolin dans la composition géopolymère va de préférence de 0,1 :1 à 2 :1 environ, de façon particulièrement préférée de 0,5 :1 à 1,0 :1 environ, et de façon plus particulièrement préférée est d'environ 1 :1.

La composition géopolymère peut comprendre de 5 à 50% en poids environ, et de préférence de 10 à 35% en poids environ de premier et deuxième métakaolins, par rapport au poids total de la composition géopolymère.

### Le silicate alcalin

Le (ou les) silicate(s) alcalin(s) présent(s) dans la composition géopolymère peuvent être choisi parmi les silicates de sodium, les silicates de potassium, et leurs mélanges.

Les silicates alcalins commercialisés par la société Silmaco ou par la société PQ corporation sont préférés.

Avantageusement, la composition géopolymère employée selon l'invention comprend au moins un silicate de sodium.

Un silicate alcalin utile selon l'invention peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 80% en poids environ, et de préférence de 10 à 50% en poids environ de silicate alcalin, par rapport au poids total de la composition géopolymère.

Selon un mode de réalisation intéressant, la composition géopolymère utilisée selon l'invention comprend un silicate alcalin du type précité, de préférence un silicate de sodium, et deux aluminosilicates distincts qui sont de préférence deux métakaolins distincts du type précité, avec une teneur en silicate alcalin qui est de préférence entre 70% et 90 %, de préférence entre 75% et 85% (par exemple de l'ordre de 80%) par rapport à la masse totale de silicate et d'aluminosilicates. La teneur en aluminosilicates et quant à elle comprise entre 10% et 70 %, de préférence entre 15% et 25% (par exemple de l'ordre de 20%) par rapport à la masse totale de silicate et d'aluminosilicates.

La composition géopolymère peut éventuellement comprendre plusieurs silicates alcalin, à savoir au moins un silicate alcalin du type précité et un deuxième silicate alcalin différent du premier.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO2/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation possible de l'invention, la composition géopolymère comprend :
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

### La base alcaline

La base alcaline typiquement employée dans la composition géopolymère utile selon l'invention peut par exemple être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de l'application sur le substrat.

### La teneur en eau

Le rapport massique matières solides/eau dans ladite composition géopolymère détermine la cinétique de solidification (prise) de la composition, ainsi que la viscosité de la composition géopolymère lors de son application .

La composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

### Additifs optionnels

La composition géopolymère utile selon l'invention peut éventuellement comprendre un ou plusieurs additifs choisis parmi:
- au moins un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène- styrène (SEPS) ; un copolymère d'éthylène et d'acétate de vinyle (EVA), un polyorganosiloxane réticulé (e.g. à l'aide d'un peroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,
- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés,
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Lorsqu'un colorant est présent, il s'agit de préférence d'un colorant liquide à température ambiante (i.e. à 18-25°C).

La composition géopolymère peut comprendre de 0,01 à 15% en poids environ d'additif(s), et de préférence de 0,5 à 8% en poids environ d'additif(s), par rapport au poids total de la composition géopolymère.

### Préparation de la composition géopolymère

Une composition géopolymère utile selon l'invention peut typiquement être préparé selon une étape (E) de mélange de l'aluminosilicate, ou du mélange d'aluminosilicates lorsque plusieurs aluminosilicates sont employés, avec le silicate alcalin, ou le mélange de silicates alcalins le cas échéant, l'eau, et éventuellement la base alcaline et/ou les additifs.

Cette étape de mélange est généralement effectuée à un pH élevé, notamment variant de 10 à 13.

Cette étape de mélange comprend de préférence les sous-étapes suivantes :
(E₁) préparation d'une solution aqueuse d'un premier silicate alcalin ; et
(E₂) mélange d'un premier aluminosilicate sous forme de poudre avec la solution aqueuse de silicate alcalin préparée à la sous-étape (E₁).

La solution aqueuse du premier silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

La sous-étape (E₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de la sous-étape (E₁), et du premier aluminosilicate lors de la sous-étape (E₂).

Lorsqu'on emploie un deuxième aluminosilicate et/ou un deuxième silicate alcalin, l'étape (E) de préparation de la composition géopolymère peut comprendre le mélange dudit premier aluminosilicate et éventuellement dudit deuxième aluminosilicate, avec ledit premier silicate alcalin, éventuellement ledit deuxième silicate alcalin, de l'eau, et éventuellement la base alcaline.

L'étape (E) comprend de préférence le mélange des premier et deuxième métakaolins, avec le premier silicate alcalin et éventuellement le deuxième silicate alcalin, de l'eau, et éventuellement une base alcaline.

Selon une forme de réalisation préférée, l'étape (E) comprend les sous-étapes suivantes :
(Ea) mélange des premier et deuxième silicates alcalins, notamment sous agitation ;
(Eb) éventuel ajout d'une base alcaline, notamment en maintenant l'agitation ; et
(Ec) l'ajout des premier et deuxième métakaolins, notamment en maintenant l'agitation.

À l'issue de l'étape (E), notamment à l'issue de la sous-étape (E2) ou (E c) lorsqu'elles sont mises en oeuvre, on obtient préférentiellement une solution fluide et homogène.

À l'issue de l'étape (E), la composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

Un tel rapport massique permet d'avoir une composition géopolymère assez fluide pour permettre sa manipulation, et dont la cinétique de solidification est assez lente pour permettre une application sur le substrat.

Le rapport massique matières solides/eau dans ladite composition géopolymère peut permettre de déterminer la cinétique de solidification de ladite composition géopolymère.

Après l'étape (E) de préparation de la composition géopolymère, et avant son imprégnation sur le matériau fibreux, la composition géopolymère peut éventuellement être chauffée, notamment à une température allant de 55°C à 95°C environ, par exemple entre 70°C à 90°C environ. Ce chauffage peut faciliter l'étape d'imprégnation. Le cas échéant, il convient néanmoins de contrôler les conditions de chauffage, qui, si elles sont trop drastiques, peuvent induire des phénomènes de polymérisation et de prise en masse.

### La ou les couches de matériau inflammable des parois du compartiment

Le matériau inflammable qui constitue la ou les couches de matériau inflammable du compartiment comprend avantageusement au moins un polymère choisi parmi le PVC et les polyoléfines comme par exemple le polyéthylène (PE) et le polypropylène (PP). Selon un mode intéressant, ce polymère est le PVC et le compartiment comprend alors au moins une couche à base de PVC.

### La couche de masquage des parois du compartiment (optionnelle)

Lorsqu'une couche de masquage est présente sur la surface externe ou interne du compartiment, en vue de masquer la couche à base de géopolymère, cette couche de masquage peut être une couche de matériau inflammable du type précité, ou bien alternativement une couche de peinture ou de vernis de préférence à base aqueuse (la couche à base de matériau géopolymère s'avère constituer une excellente couche d'accroche pour les compositions aqueuses).

L'Exemple ci-après, donné en référence aux Figures ci-annexées, illustre l'invention.

### DESCRIPTION DES FIGURES

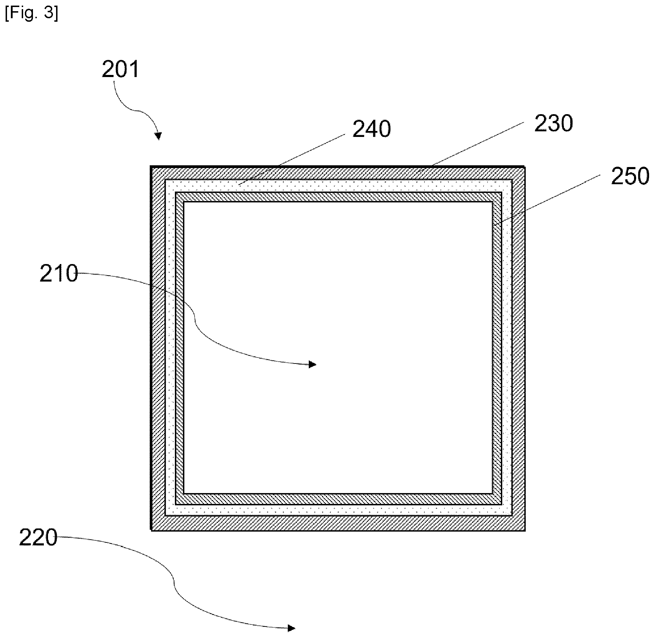

Les figures ci-annexées illustrent des mdoes possibles de l'invention. Il s'agit de représentations schématiques où les échelles ne sont pas respectées.

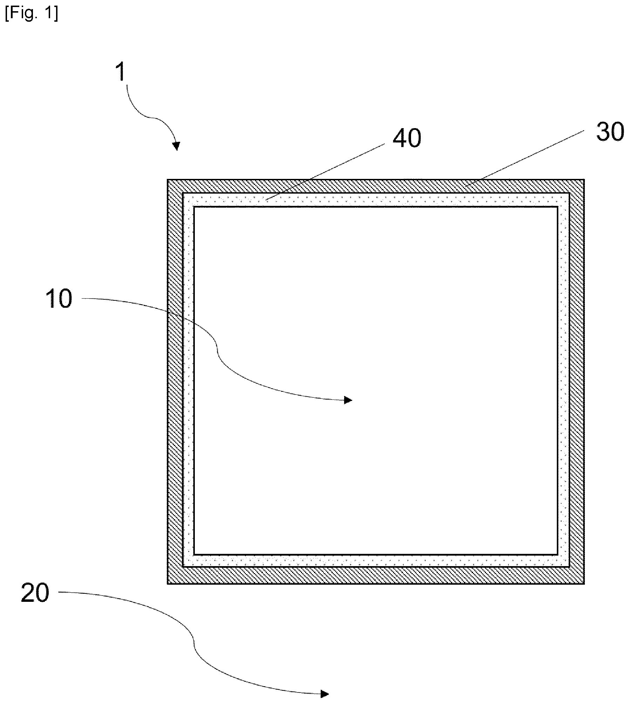

La **figure 1** [Fig. 1] est une vue en coupe d'un element ignifugé selon l'invention constitué par un unique compartiment 1 dont les parois définissent un espace interne 10 et un espace externe 20. Les parois du compartiment sont constituée par une couche de polymère 30 (typiquement un boitier de PVC), recouverte sur toute la face interne du compartiment par une couche 40 à base de géopolymère.
   La couche 40 est typiquement obtenue par application sur la surface interne du compartiment 1 d'un substrat de type carton imprégné de composition géopolymère liquide, puis séchage du dépôt réalisé ;

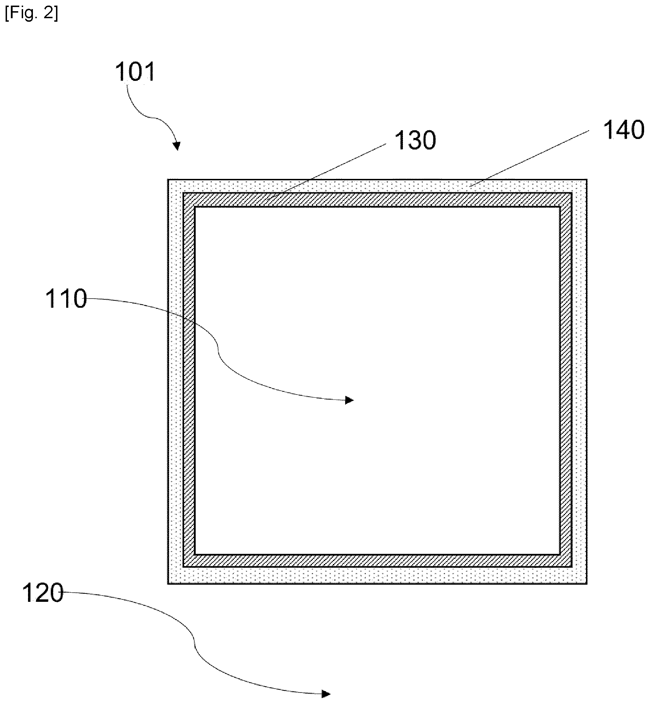

La **figure 2** [Fig. 2] est une vue en coupe d'un élément ignifugé selon l'invention constitué par un unique compartiment 101 dont les parois définissent un espace interne 110 et un espace externe 120. Les parois du compartiment sont constituée par une couche de polymère 130 (typiquement un boitier de PVC), recouverte sur toute la face externe du compartiment par une couche 40 à base de géopolymère.
   La couche 40 est typiquement obtenue par application sur la surface externe du compartiment 101 d'un substrat de type carton imprégné de composition géopolymère liquide, puis séchage du dépôt réalisé
La **figure 3** [Fig. 3] est une vue en coupe d'un élément ignifugé selon l'invention constitué par un unique compartiment 201 dont les parois définissent un espace interne 210 et un espace externe 220. Les parois du compartiment sont constituées par une première couche de polymère 230 (typiquement un boitier de PVC), une couche 240 à base de géopolymère et une seconde couche de polymère 250 (typiquement un PVC identique ou non à celui de la première couche).

La structure de la Figure (3) est typiquement obtenue en réalisant la couche 240 par application sur la couche 230 (qui constitue alors la surface interne du compartiment 201) d'un substrat de type carton imprégné de composition géopolymère liquide, séchage du dépôt réalisé puis application de la couche 250. Ce mode de réalisation est plutôt préconiqé lorsqu'on cherche en priorité à confiner des départ d'incendies démarrant au sein de l'espace interne 210.

Alternativement, la structure de la Figure 3 peut être obtenue en appliquant d'abord un substrat de type carton imprégné de composition géopolymère liquide sur la couche 250 (qui constitue alors la surface externe du compartiment 201), puis en séchant le dépôt réalisé pour obtenir la couche 240 et en appliquant ensuite la couche 230 sur la couche 240 réalisée. Ce second mode de réalisation est plutôt préconisé lorsqu'on cherche en priorité à protéger l'espace interne 210 du compartiment de feu dans la zone externe 220.

### EXEMPLE

Une composition géopolymère a été préparée à partir d'un mélange contenant en masse :
78% de silicate de sodium
11% d'un métakaolin PoleStar^{®} 450
11% d'un métakaolin PoleStar^{®} 200R.

La composition obtenue a été imprégné sur du carton appliqué ensuite sur les parois internes d'un boitier de PVC selon le mode illustré sur la Figure 1 et dont l'espace interne était traversé par un câble.

Le boitier protégé ainsi obtenu a été testé dans les conditions de la norme IEC/60332-1-2 (2015) en appliquant une flamme dans l'espace interne du boitier le câble permet de maintenir le boitier en place au cours de l'essai.

A titre de comparaison, le même test a été réalisé avec un boitier de PVC nu, non recouvert par la couche à base de géopolymère (boitier témoin).

A l'issue des tests, le boitier témoin a subi une combustion totale avec fusion totale du PVC et écoulement complet bien avant la fin du test, alors que le boitier protégé selon l'invention n'a pas été consumé, avec une incendie contenu dans le boitier qui reste en place du début à la fin du test

## Revendications

1. Elément ignifugé comprenant un compartiment (1 ; 101 ;201) renfermant des câbles électriques ; où ledit compartiment comporte des parois délimitant un espace interne audit compartiment et un espace externe audit compartiment, ces parois comprenant au moins une couche (30 ; 130 ; 230,250) d'un matériau inflammable et au moins une couche à base d'un matériau géopolymère (40 ;140 ;240).

2. Elément ignifugé selon la revendication 1, où la couche de matériau inflammable (30 ; 130 ; 230,250) est une couche de matière plastique, typiquement une couche de PVC.

3. Elément ignifugé selon la revendication 1 ou 2 ; où la couche à base de matériau géopolymère (40) est localisée entre les câbles contenus dans l'espace interne du compartiment et la couche de matériau inflammable

4. Elément ignifugé selon la revendication 1 ou 2 ; où la couche à base de matériau géopolymère (140) est localisée entre la couche de matériau inflammable et l'espace externe au compartiment

5. Elément ignifugé selon l'une des revendications 1 à 4 ; où la couche à base de matériau géopolymère (240) est localisée entre une première couche de matériau inflammable (du coté de l'espace interne du compartiment) et une seconde couche de matériau inflammable, de composition identique ou non à celle de la première couche de matériau inflammable

6. Elément ignifugé selon l'une des revendications 1 à 5, où la composition géopolymère comprend au moins un aluminosilicate, au moins un silicate alcalin, de l'eau, et éventuellement une base alcaline.

7. Elément ignifugé selon la revendication 6, où la composition géopolymère comprend un mélange de deux aluminosilicates distincts, à savoir au moins un premier aluminosilicate et au moins un deuxième aluminosilicate distinct du premier aluminosilicate.

8. Elément ignifugé selon la revendication 7, où le premier aluminosilicate est un premier métakaolin choisi parmi les kaolins calcinés à une température T_{c1} d'au moins 650°C environ, et le deuxième aluminosilicate est un deuxième métakaolin choisi parmi les kaolins calcinés à une température T_{c2} telle que T_{c2} - T_{c1} ≥ 100°C.

9. Elément ignifugé selon l'une des revendications 6 à 8 où le silicate alcalin est un silicate de sodium.

10. Utilisation d'un élément ignifugé selon l'une des revendications précédents, à titre d'armoire électrique ou de boite de dérivation, notamment dans un logement d'habitation ou dans un immeuble destiné à recevoir du public.
